# FASCICULE DE BREVET EUROPEEN

(11) **EP 1 954 932 B1**
(45) Date de publication et mention de la délivrance du brevet: **10.10.2012**
(21) Numéro de dépôt: 06842053.8
(22) Date de dépôt: 28.11.2006
(51) Int. Cl.: F02D 41/00, F02D 41/06, F02N 19/00

(54) **PROCEDE ET DISPOSITIF DE COMMANDE D'UNE VANNE DE RECIRCULATION DE GAZ BRULES LORS DE LA PHASE DE DEMARRAGE DU MOTEUR**
VERFAHREN UND VORRICHTUNG ZUR STEUERUNG EINES VENTILS ZUM RECYCELN VON WÄHREND EINER MOTORSTARTPHASE VERBRANNTEN GASEN
METHOD AND DEVICE FOR CONTROLLING A VALVE FOR RECYCLING GASES BURNED DURING AN ENGINE STARTING PHASE

(30) Priorité: 02.12.2005 FR 0512247
(43) Date de publication de la demande: 13.08.2008
(73) Titulaire: Renault SAS, 92100 Boulogne Billancourt (FR)
(72) Inventeur: SEKFANE, Nacer, F-91290 Arpajon (FR)
(86) Numéro de dépôt international: PCT/FR2006/051242
(87) Numéro de publication internationale: WO 2007/063246

(56) Documents cités:
- EP-A- 1 138 937
- DE-A1- 19 921 505
- US-B1- 6 883 504
- PATENT ABSTRACTS OF JAPAN vol. 2003, no. 05, 12 mai 2003 (2003-05-12) & JP 2003 020981 A (NISSAN MOTOR CO LTD), 24 janvier 2003 (2003-01-24)
- PATENT ABSTRACTS OF JAPAN vol. 004, no. 169 (M-043), 21 novembre 1980 (1980-11-21) & JP 55 119945 A (NISSAN MOTOR CO LTD), 16 septembre 1980 (1980-09-16)

## Description

### DOMAINE TECHNIQUE DE L'INVENTION

La présente invention concerne, dans le domaine des moteurs à combustion interne, des systèmes externes de contrôle de la combustion utilisant une recirculation des gaz brûlés EGR (Exhaust Gas Recirculation). L'invention concerne plus particulièrement un procédé et un dispositif de commande d'une vanne EGR lors de la phase de démarrage du moteur diesel.

### ARRIERE-PLAN TECHNOLOGIQUE DE L'INVENTION

De manière connue, le principe de la recirculation de gaz brûlés (EGR) réside dans l'introduction d'une quantité donnée de gaz d'échappement en emplacement d'une partie de l'air frais à l'admission des moteurs Diesel ou essence. Les systèmes d'EGR externes utilisent pour cela une vanne qui prélève une partie des gaz d'échappement pour les réintroduire à l'admission. Ce principe permet de limiter les émissions NOx (d'autant plus que la fraction de gaz recyclés est grande) mais réduit les performances du moteur.

Pour ce type de solution, il faut distinguer deux voies : la recirculation à haute pression et la recirculation à basse pression. Tandis que la recirculation à basse pression consiste à prélever des gaz après la turbine pour les réinjecter avant le compresseur d'air de suralimentation (les gaz peuvent parfois aussi être réinjectés en amont du refroidisseur d'air de suralimentation qui suit le compresseur), la recirculation à haute pression (moteurs suralimentés) consiste au contraire à prélever des gaz en amont de la turbine pour les réinjecter en aval du compresseur. La recirculation à haute pression présente donc l'avantage, par rapport la recirculation à basse pression, de requérir un circuit plus court (une seule vanne, réaction rapide du système). La différence de pression entre l'échappement et l'admission est utilisée comme force motrice, le débit étant régulé par la vanne.

Actuellement, dans le cas d'un circuit avec EGR haute pression associé à un moteur diesel ayant des taux de compression faibles ne dépassant pas 16, il est de plus en plus difficile d'effectuer un démarrage à froid du fait de conditions thermodynamiques réduites (température et pression) dans le cylindre. Dans ce qui suit, il faut comprendre par démarrage à froid un départ qui s'effectue pour une gamme de températures qui commence à partir de -30°C. Il existe donc un besoin pour améliorer le démarrage sur les moteurs diesel suralimentés les plus récents, à taux de compression réduit.

Il est connu, par le document EP 1 138 928, une recirculation des gaz brûlés permettant de s'adapter à des conditions de basse température, dans des phases à faible vitesse du moteur. Ce document prévoit de préférence un démarrage du moteur avec une désactivation de la recirculation, l'ouverture de la vanne EGR étant commandée lorsque le moteur est alimenté avec une charge suffisante. Alternativement, les vannes de recirculation peuvent être laissées ouverte au démarrage. Toutefois dans ce cas, il se produit fréquemment un calage du moteur juste après son démarrage du fait du manque d'oxygène. Même en laissant seulement une faible ouverture des vannes pour diminuer la recirculation, le moteur ne peut pas alors fonctionner de manière stable dans un régime ralenti.

Il est donc prévu dans l'art antérieur, en raison des difficultés rencontrées, de fermer la vanne EGR à froid, comme enseigné notamment dans le document EP 1 101 917.

DE19921505 décrit un démarrage à froid avec l'ouverture de la vanne EGR étant commandée lorsque un régime prédéterminé est atteint.

D'autres solutions consistent, pour les moteurs à taux de compression réduit, à utiliser une bougie céramique rapide ou à enrichir la définition technique de l'admission. Ces solutions restent insuffisamment optimales pour garantir un départ à froid du moteur sans problèmes.

### DESCRIPTION GENERALE DE L'INVENTION

La présente invention a donc pour objet de pallier un ou plusieurs des inconvénients de l'art antérieur en proposant, dans un circuit utilisant une recirculation EGR de gaz brûlés, un procédé de commande d'une vanne EGR lors de la phase de démarrage du moteur qui permette un démarrage efficace à froid, notamment pour des moteurs de type diesel à taux de compression réduit.

A cet effet, l'invention concerne un procédé de commande d'au moins une vanne de recirculation EGR des gaz brûlés lors de la phase de démarrage d'un moteur diesel du type doté d'un système externe de contrôle de la combustion avec recirculation EGR, mis en oeuvre par un dispositif de commande doté d'une unité de traitement, caractérisé en ce qu'il comprend une étape d'ouverture complète de la vanne EGR par le dispositif de commande, pendant une durée réduite déterminée à partir de l'initiation du démarrage du moteur et, au moins pendant la période de démarrage du moteur permettant d'augmenter le régime moteur jusqu'à un régime seuil de fin de démarrage :
- une étape de collecte par le dispositif de commande de données représentatives d'une vitesse de régime moteur et d'une température ambiante, fournies à l'aide de capteurs ;
- une étape de calibration dynamique utilisant l'unité de traitement pour déterminer une consigne d'ouverture de la vanne EGR en fonction des données fournies au dispositif de commande lors de l'étape de collecte ;
- une étape évolutive de fermeture partielle de la vanne EGR par le dispositif de commande en correspondance avec ladite consigne d'ouverture déterminée lors de l'étape de calibration dynamique.

Ainsi, le procédé selon l'invention permet d'optimiser le démarrage en suivant une loi d'ouverture de la vanne EGR appropriée aux besoins du moteur. Le fait de diminuer l'ouverture de façon évolutive permet de réduire voire d'éliminer le risque de calage (en cas de manque d'oxygène) : dans la seconde partie de la phase de démarrage, la vanne est suffisamment fermée pour éviter qu'un volume d'EGR trop important se trouve dans le circuit d'admission.

Selon une autre particularité, le procédé selon l'invention comprend une étape de fermeture complète de la vanne EGR effectuée par le dispositif de commande au moins lorsque le régime seuil de fin de démarrage est atteint.

Ainsi, la fermeture est obtenue à l'issue d'un processus progressif qui est fonction de la montée en régime du moteur. La fermeture se produit au plus tard lorsque le seuil est atteint. Ce seuil est de préférence inférieur au régime du ralenti pour éviter les instabilités du moteur après départ.

Selon une autre particularité, le procédé selon l'invention comprend une étape préalable de calcul du seuil du régime seuil de fin de démarrage par l'unité de traitement, à l'aide d'une table de correspondance mémorisée dans le dispositif de commande et tenant compte de la température ambiante initialement collectée.

Selon une autre particularité, l'étape de collecte comprend une mesure de température d'un liquide de refroidissement du moteur pour mesurer ladite température ambiante.

Selon une autre particularité, l'étape de calibration dynamique utilise une cartographie de consigne dans laquelle deux axes de paramétrage sont représentés par des informations de régime moteur en abscisse et par des informations de température ambiante en ordonnée, un troisième axe étant prévu pour la consigne d'ouverture permettant de commander un actionneur qui ajuste la position d'ouverture de la vanne EGR, ladite cartographie étant préalablement mémorisée sous la forme d'une table de correspondance par le dispositif de commande.

Selon une autre particularité, la consigne de commande représente un pourcentage d'ouverture/fermeture de la vanne EGR.

Selon une autre particularité, l'étape d'ouverture complète de la vanne EGR n'est réalisée que si la température ambiante ne dépasse pas un seuil de température calibrable et si le moteur n'est pas démarré, l'état de démarrage du moteur étant détecté par le dispositif de commande à l'aide d'une information de type bit de démarrage.

Selon une autre particularité, l'étape de calibration dynamique comprend une interpolation linéaire effectuée par des moyens de calcul de l'unité de traitement pour déterminer, à partir des données fournies au dispositif de commande lors de l'étape de collecte, la consigne d'ouverture.

Selon une autre particularité, l'étape évolutive de fermeture partielle de la vanne EGR comprend :
- une première sous-étape permettant une fermeture partielle avec une première vitesse globale de fermeture lente ; puis
- une seconde sous-étape permettant de poursuivre la fermeture partielle avec une seconde vitesse globale de fermeture beaucoup plus élevée que ladite première vitesse.

Selon une autre particularité, l'étape de calibration dynamique utilise en outre un paramètre indicateur d'altitude pour corriger ou pondérer la consigne d'ouverture.

Selon une autre particularité, le procédé selon l'invention est mis en oeuvre par l'intermédiaire d'un dispositif de commande de type calculateur et utilisant un système de recirculation du type à haute pression dont la vanne EGR est ouverte par un signal de commande provenant du dispositif de commande lors de l'étape d'ouverture complète pour faire recirculer en amont d'une turbine d'échappement un mélange air/carburant n'ayant pas subi de combustion vers un répartiteur d'admission du moteur.

Selon une autre particularité, le procédé selon l'invention comprend une étape de commande d'un moyen d'aiguillage pour orienter la totalité du flux des gaz recirculés vers une conduite de dérivation parallèle à un refroidisseur de la recirculation EGR.

Selon une autre particularité, le procédé comprend une étape de contrôle par le dispositif de commande d'un turbocompresseur à géométrie variable pour maintenir des ailettes de la turbine fermées afin d'augmenter le débit de gaz recirculés.

Un objectif supplémentaire de l'invention est de proposer un dispositif de commande qui utilise la recirculation EGR de façon pour améliorer la montée en régime du moteur lors du démarrage.

A cet effet, l'invention concerne un dispositif de commande d'au moins une vanne de recirculation EGR des gaz brûlés lors de la phase de démarrage d'un moteur diesel du type doté d'un système externe de contrôle de la combustion avec recirculation EGR, le dispositif comprenant une unité de traitement, caractérisé en ce qu'il comporte :
- des moyens de mémorisation pour stocker au moins une information représentative d'un régime seuil de fin de démarrage ;
- des moyens de détection d'une phase de démarrage ;
- des moyens actionneurs agencés pour maintenir la vanne EGR complètement ouverte pendant une durée réduite déterminée à partir de l'initiation du démarrage du moteur ;
- des moyens d'estimation d'une vitesse de régime moteur ;
- des moyens d'estimation d'une température ambiante ;
- des moyens de collecte de données représentatives de la température ambiante estimée et de la vitesse de régime moteur estimée ;
- des moyens d'association pour associer aux données fournies par les moyens de collecte une consigne d'ouverture de la vanne EGR et contrôler avec cette consigne les moyens actionneurs afin de contrôler une fermeture partielle de la vanne EGR durant la phase de démarrage.

Selon une autre particularité, les moyens d'association sont agencés pour comparer, lors de la phase de démarrage, une valeur de vitesse de régime moteur estimée fournie par les moyens de collecte à une valeur représentative du régime seuil de fin de démarrage, les moyens d'association délivrant une consigne de fermeture complète de la vanne EGR dès que la valeur de seuil est atteinte.

Selon une autre particularité, l'unité de traitement est agencée pour calculer préalablement un régime seuil de fin de démarrage, en utilisant une table de correspondance stockée dans les moyens de mémorisation permettant de tenir compte de la température ambiante initialement collectée pour déterminer ledit régime seuil.

Un objectif supplémentaire de l'invention est de proposer un programme exécutable par un système calculateur permettant de commander la vanne EGR de façon adéquate lors d'une phase de démarrage à froid.

A cet effet, l'invention concerne un programme de calculateur directement chargeable dans la mémoire d'un calculateur pour commander les étapes du procédé de l'invention lorsque ledit programme est exécuté sur un calculateur.

L'invention, avec ses caractéristiques et avantages, ressortira plus clairement à la lecture de la description faite en référence aux dessins annexés dans lesquels :
- les figures 1A et 1B représentent chacune un schéma fonctionnel illustrant un dispositif de commande selon l'invention apte à contrôler une recirculation à haute pression des gaz d'EGR en de fermant progressivement la vanne EGR en fonction de la montée du régime et des conditions de température ;
- la figure 2 montre un diagramme représentant l'évolution du pourcentage d'ouverture de la vanne EGR lors de la montée en régime en phase de démarrage à froid ;
- la figure 3 montre un logigramme illustrant des étapes du procédé selon l'invention.

### DESCRIPTION DES MODES DE REALISATION PREFERES DE L'INVENTION

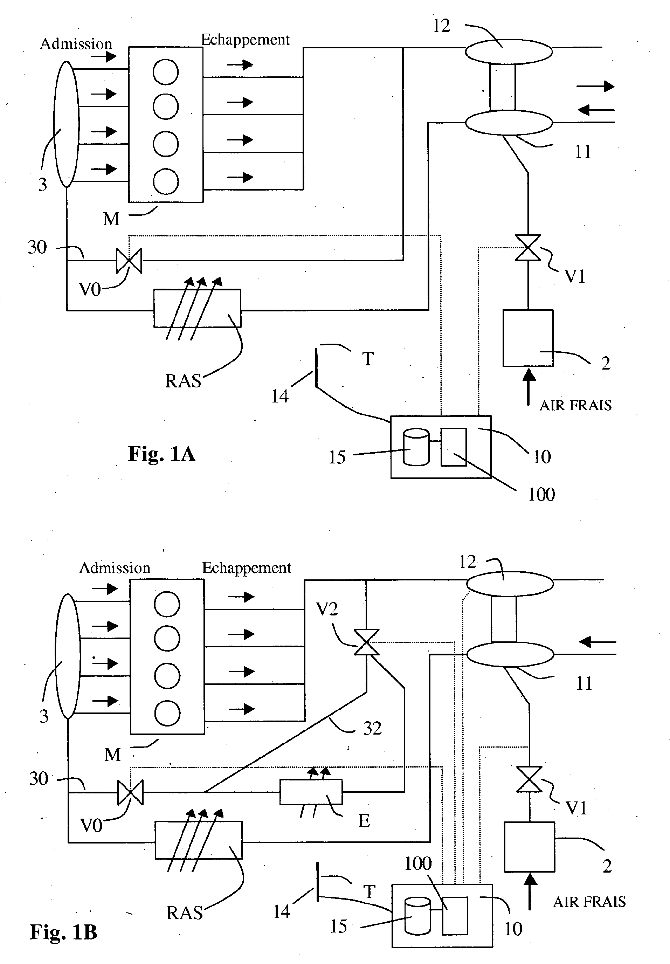

En référence à la figure 1A, l'invention propose un procédé de commande d'au moins une vanne de recirculation EGR (V0) des gaz brûlés lors de la phase de démarrage d'un moteur diesel (M) ayant un système externe de contrôle de la combustion avec recirculation EGR. Ce procédé est mis en oeuvre par un dispositif de commande (10) doté d'une unité de traitement (100) pour contrôler l'ouverture d'une vanne EGR (V0). Dans l'exemple non limitatif d'un moteur (M) équipé d'une recirculation EGR haute pression. Les gaz de la recirculation EGR sont introduits en amont du collecteur d'admission d'air (3) et par exemple en aval du refroidisseur d'air de suralimentation (RAS). Les gaz à recirculer sont prélevés en amont de la turbine (12) libérant les gaz d'échappement, comme illustré à la figure 1A. La recirculation des gaz brûlés EGR (Exhaust Gaz Recirculation), dans un fonctionnement EGR haute pression, permet notamment de raccourcir le circuit qui, avec une seule vanne (V0) assure une réaction plus rapide du système. Le collecteur ou répartiteur (3) d'admission reçoit ainsi des gaz brûlés en complément du mélange avec air frais issu du compresseur d'air de suralimentation (11). En référence à la figure 1B, un volet by-pass (V2) est à maintenir ouvert vers la conduite de dérivation « By-pass » du circuit de recirculation EGR.

Le système est par exemple doté de moyens d'admission d'air frais vers le compresseur de suralimentation (11). Ces moyens d'admission d'air frais vers le compresseur (11) peuvent comporter un conduit d'admission muni d'un volet d'admission (V1) pour réguler le débit d'air frais. Cet air frais est par exemple préalablement filtré à l'aide d'un boîtier filtre (2) ou moyen d'épuration analogue, comme illustré aux figures 1A et 1B. Le volet d'admission (V1) peut être contrôlé par le dispositif de commande (10).

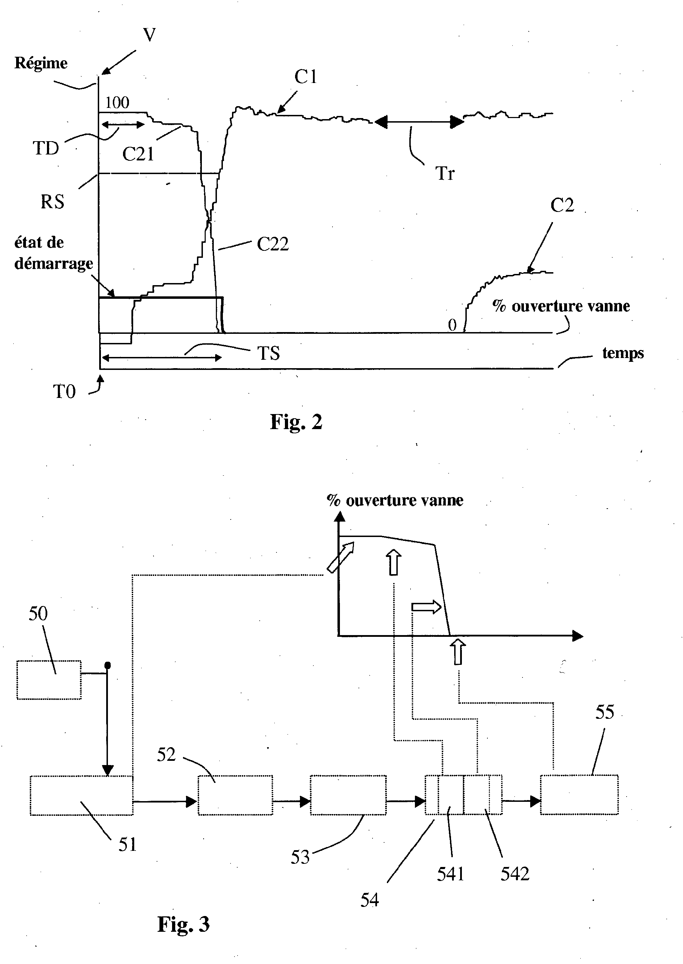

Dans le mode de réalisation de la figure 2, le dispositif de commande (10) permet dans un premier temps d'ouvrir complètement la vanne EGR (V0) pendant une durée réduite (TD) déterminée à partir de l'initiation (T0) du démarrage du moteur (M) puis, pendant la période de démarrage (TS) du moteur (M) où le régime moteur augmente jusqu'à un régime seuil (RS) de fin de démarrage, le dispositif de commande (10) contrôle une fermeture partielle de la vanne EGR (V0). Cette fermeture est commandée de façon évolutive en fonction d'une consigne d'ouverture déterminée via une calibration utilisant des données représentatives d'une vitesse (V) de régime moteur et d'une température (T) ambiante.

Contrairement à une configuration classique, la vanne EGR (V0) est utilisée en position grande ouverte sous démarreur pour laisser passer les gaz dans la conduite (30) de recirculation EGR. Dans le cadre de l'invention, il faut de préférence que le dispositif de commande (10) gère cette vanne (V0) en l'ouvrant avant même d'activer le démarreur. Une fois la phase de démarrage terminée, la vanne EGR (V0) est complètement fermée. Dans un mode de réalisation préféré de l'invention, la fermeture complète est commandée lorsqu'un seuil de régime (RS) inférieur à celui du ralenti est atteint. Cela permet d'éviter des instabilités du moteur (M) après départ.

Lors de la phase de départ à froid, l'ouverture de la vanne EGR (V0) ne signifie pas re-circulation de gaz brûlés, mais re-circulation du mélange air/carburant n'ayant pas subi de combustion. Si l'effet gain de température est négligeable (le gain de température lié à la compression est perdu par la détente du mélange), il y à un autre potentiel de gain lie aux effets suivants :
- a) le mélange réadmis permet une accumulation plus importante de carburant dans le cylindre lors des cycles sans combustion et cela sans augmenter les débits carburant injectés, de sorte que les conditions thermodynamiques dans le cylindre sont améliorées et donc le démarrage du moteur est meilleur ;
- b) le carburant vaporisé et homogénéisé dans l'air lors d'une première injection est un facteur d'augmentation du nombre de sites de richesse locale susceptibles de rencontrer la bougie de préchauffage et donc de brûler ; et
- c) le fait de créer un circuit court d'échappement et d'admission des gaz plus perméable engendre une très légère augmentation du régime sous démarreur.

On comprend que l'effet b) susmentionné peut s'avérer très utile dans le cas d'une « Définition Technique » de chambre de combustion atypique dans laquelle l'emplacement de la bougie ne permet pas aux jets de carburant injecté de venir lécher cette bougie (effet angle de nappe et manque d'effet tourbillon "swirl").

Dans le mode de réalisation de la figure 1B, les gaz réintroduits par la conduite EGR peuvent emprunter une voie plus courte par l'intermédiaire d'une conduite de dérivation (32) « By-pass ». Dans le cas d'une définition technique DT avec refroidisseur EGR (E) et conduite By-pass de dérivation (32), la recirculation du mélange air/carburant doit emprunter de préférence la voie du By-pass. En effet, il bien plus intéressant dans ce cas de faire rapidement recirculer les gaz lors du départ à froid pour améliorer les conditions d'auto-inflammabilité du mélange dans le cylindre. Le passage de ces gaz recirculés par le refroidisseur (E) est de préférence à éviter car cela va à l'encontre de l'objectif recherché. On comprend que le refroidissement des gaz ainsi que la moins bonne perméabilité de l'échangeur du refroidisseur (E) par rapport à la conduite (32) by-pass font que les gaz arrivent au cylindre voisin non seulement plus froid mais en moindre quantité. La perméabilité des circuits EGR doit être bonne pour assurer que le gain de la solution proposée soit le plus élevé possible.

De plus, si une partie du carburant s'est évaporé lors de la compression, elle pourrait se condenser au passage du refroidisseur (E) et n'offrirait plus les sites de richesses susceptibles de brûler. On comprend donc que la vanne EGR (V0) et le volet by-pass (V2) à ouvrir sont disposés de façon à permettre une recirculation rapide qui ne refroidit pas les gaz recirculés. Dans le cas d'une définition technique qui prévoit un turbocompresseur à géométrie variable, les ailettes de la turbine (12) doivent être maintenues fermées afin de favoriser l'écoulement des gaz recirculés par le conduit (30).

En référence à la figure 1A, le dispositif de commande (10) contrôle au moins une vanne de recirculation EGR (V0) des gaz brûlés lors de la phase de démarrage du moteur diesel (M) pour ajuster la diminution progressive de recirculation. La diminution doit permettre de favoriser la montée en régime du moteur (M). Le dispositif comporte pour cela des moyens actionneurs agencés pour maintenir la vanne EGR (V0) complètement ouverte pendant une durée réduite (TD) déterminée à partir de l'initiation (T0) du démarrage du moteur (M), des moyens de mémorisation (15) pour stocker au moins une information représentative d'un régime seuil (RS) de fin de démarrage et des moyens de détection d'une phase de démarrage.

Des expériences effectuées par l'inventeur sur des départs à froid d'un moteur ayant une chambre de combustion présentant des difficultés de démarrage tant sur l'initiation de la combustion que sur la rampe de régime (taux de compression faible inférieur ou égal à 16), ont montré que la commande extérieure de la vanne EGR en pleine ouverture lors du départ à froid permet d'améliorer le démarrage du moteur mais aboutit en général au calage du moteur (M) juste après son démarrage du fait de manque d'oxygène.

Un deuxième essai avec la vanne EGR (V0) ouverte partiellement après un temps d'environ 1,5 seconde (Ce temps est subi en raison d'un temps de latence pour la réception des gaz EGR par le moteur) à permis de montrer que la rampe de régime est amélioré et le moteur ne cale pas. Toutefois, le ralenti obtenu est instable.

Dans un mode de réalisation préféré, le dispositif de commande (10) selon l'invention vise à obtenir un gain au départ grâce à l'ouverture complète de la vanne EGR (V0), notamment en temps de démarrage (idem pour le temps de la 1^{er} combustion) et en qualité de la rampe de régime (départ franc) tout en assurant une certaine continuité du démarrage en prenant en compte les besoins du moteur (M).

Le dispositif de commande (10) est associé à cette fin à des moyens d'estimation (non représentés) d'une vitesse (V) de régime moteur et des moyens (14) d'estimation d'une température (T) ambiante. Les estimations peuvent résulter simplement d'une mesure de vitesse (V) de régime moteur et d'une mesure de température (T) ambiante. Des moyens de collecte de données représentatives de la température (T) ambiante estimée et de la vitesse (V) de régime moteur estimée sont prévus dans le dispositif de commande (10) pour prendre en compte les besoins du moteur (M). Autrement dit, le dispositif (10) peut être doté d'une fonction d'ajustement de l'apport en mélange air/carburant dès le départ du moteur (M). Dans un mode de réalisation de l'invention, l'état de fonctionnement de la commande de la vanne EGR (V0) peut être paramétré pour maintenir cette vanne ouverte lors du départ à froid du moteur (M) et le domaine de définition de cet état de fonctionnement peut être limité par un seuil de température d'eau, un seuil de régime maximum et l'état d'un bit de démarrage (startbit). Un bit de reconnaissance d'un état de ré-départ moteur peut aussi être prévu.

En référence à la figure 1A, durant cet état correspondant à la durée du départ à froid, la vanne EGR de type haute pression est par exemple commandée en position en fonction uniquement de consignes d'ouverture de la vanne EGR (V0) (des éventuelles consignes de débit d'air ne seront pas prises en compte). Dans un mode de réalisation de l'invention, la commande en boucle ouverte de la position est suffisante et il est permis de ne pas utiliser une régulation de type PID car la rampe de régime lors du départ à froid est suffisamment rapide.

Le dispositif de commande (10) comprend des moyens d'association pour associer aux données fournies par les moyens de collecte une consigne d'ouverture de la vanne EGR (V0) et contrôler avec cette consigne les moyens actionneurs afin de contrôler une fermeture partielle de la vanne EGR (V0) durant la phase de démarrage. Dans un mode de réalisation préféré de l'invention, une cartographie de commande en position de la vanne EGR de type 8X8 est nécessaire pour déterminer la consigne d'ouverture. Cette cartographie est par exemple définie par le régime (vitesse du moteur) en abscisse et par la température d'eau en ordonnée. La température d'eau permet d'avoir une information représentant la température (T) ambiante pour le moteur (M). Dans un exemple de réalisation de l'invention, cette température ambiante peut être obtenue par une mesure de température d'un liquide de refroidissement du moteur (M).

La cartographie de consigne (position ; débit ; pression...) est constituée de façon connue en soi de deux entrées pour le dispositif (10) de commande. Ces entrées représentent les axes de la cartographie : ici, il s'agit de régime moteur en abscisse et température d'eau en ordonnée. Le contenu de la cartographie (axe Z) correspond au paramétrage souhaité de commande de l'actionneur concerné, ce paramétrage est optimisé par l'opérateur en fonction des réponses du moteur (M) étudié lors des démarrages dans diverses conditions atmosphériques (-30 à + 20 degrés Celsius). Selon l'invention, le paramétrage porte sur la consigne d'ouverture/fermeture de la vanne EGR en pourcentage, appelée consigne d'ouverture ou consigne de position.

Pour ladite cartographie, l'axe Z peut être le rapport cyclique d'ouverture RCO de commande position (%) souhaité, c'est-à-dire un pourcentage d'ouverture de la vanne EGR (V0). Le choix des points de rupture (breakpoints) des axes X et Y de cette sont à définir de la façon suivante :
- pour chaque température d'eau nulle ou négative de référence (ex : -23/-20/-15/-10 et 0°C), il faut associer un point de rupture « breakpoint » de régime égal au régime sous démarreur de l'application concernée. La pleine ouverture de la vanne EGR sera requise sur ces points.
- les trois derniers points de rupture « breakpoints » de régime sont définis de manière à avoir respectivement un régime dit régime combustion initiée (pour toutes les températures d'eau), un régime dit régime semi-démarré (400 à 500 Tr/min) et un régime haut dit démarré (750 à 800 Tr/min).

Actuellement il n'existe pas de telles cartographies dans les logiciels de calculateurs. Selon l'invention, cette cartographie fait partie de la stratégie d'ajustement souhaitée pour permettre l'ouverture de la vanne EGR (V0) lors du démarrage à froid du moteur tout en assurant une bonne mise en route.

On comprend que le dispositif de commande (10) contrôle la vanne EGR (V0) en allant de la pleine ouverture sur les régimes démarreur pour fermer ensuite cette vanne selon deux pentes lors de la rampe de régime pour une température d'eau donnée. En référence à la figure 2, la courbe (C2) correspondant au pourcentage d'ouverture de la vanne EGR (V0) comprend ainsi une zone (C21) de premier abaissement modéré et une zone suivante (C22) de second abaissement élevé, pour aboutir à la fermeture complète de la vanne EGR (V0).

Le tableau présenté ci-dessous illustre un exemple de pré-calibration de la cartographie de consigne permettant de commander la vanne EGR (V0)

Pour un moteur (M) dont les régimes sous démarreur et ralenti sont respectivement :

| T EAU (°C) | Régime sous démarreur (tr/min) | Régime ralenti (tr/min) |
|---|---|---|
| -23 | 145 | 1150 |
| -20 | 155 | 1100 |
| -15 | 170 | 1050 |
| -10 | 180 | 1000 |
| 0 | 210 | 950 |
| 10 | 230 | 900 |
| 20 | 245 | 850 |

La cartographie RCO proposée de type 8*8 peut alors être la suivante :

| | 150 | 170 | 180 | 210 | 245 | 400 | 750 | 900 |
|---|---|---|---|---|---|---|---|---|
| -30 | 60 | 57 | 55 | 52 | 50 | 37 | 20 | 5 |
| -23 | 60 | 57 | 55 | 52 | 50 | 37 | 20 | 5 |
| -20 | 60 | 58 | 56 | 53 | 49 | 35 | 15 | 5 |
| -15 | 60 | 60 | 58 | 54 | 48 | 33 | 12 | 2 |
| -10 | 60 | 60 | 60 | 55 | 47 | 30 | 10 | 0 |
| 0 | 60 | 60 | 60 | 60 | 46 | 26 | 8 | 0 |
| 10 | 60 | 60 | 60 | 60 | 55 | 20 | 5 | 0 |
| 15 | 0 | 0 | 0 | 0 | 0 | 0 | 0 | 0 |

Pour des valeurs X et/ou Y compris entre deux, la consigne est obtenue entre deux points de rupture par interpolation linéaire des valeurs qui entourent le point. Le bon choix des « breaks points » permet d'éviter une discontinuité du besoin moteur qui autrement ne sera pas vue par l'interpolation linéaire.

Dans un mode de réalisation de l'invention, l'unité de traitement du dispositif de commande (10) peut calculer préalablement un régime seuil (RS) de fin de démarrage, en utilisant une table de correspondance stockée dans les moyens de mémorisation (15) permettant de tenir compte de la température (T) ambiante initialement collectée pour déterminer le régime seuil (RS). Cette table de correspondance peut consister en une table de pré-calibration de cartographie reportant par exemple le régime prévu sous démarreur, le régime prévu pour le ralenti et le seuil de régime prévu inférieur au à celui du ralenti pour éviter les instabilités après départ.

Dans l'exemple des figures 1 et 2, les moyens d'association du dispositif de commande (10) permettent de comparer, lors de la phase de démarrage, une valeur de vitesse de régime moteur estimée (mesurée) fournie par les moyens de collecte à une valeur représentative du régime seuil (RS) de fin de démarrage. Ces moyens d'association délivrent alors une consigne de fermeture complète de la vanne EGR (V0) dès que la valeur de seuil est atteinte.

Le procédé de commande selon l'invention va à présent être plus précisément décrit en liaison avec les figures 2 et 3.

Lorsque le moteur (équipant un véhicule tel qu'une automobile) doit être démarré, le procédé utilise le dispositif de commande (10) pour effectuer une étape (51) d'ouverture complète de la vanne EGR (V0). En référence à la figure 2, pendant une durée réduite (TD) déterminée à partir de l'initiation (T0) du démarrage du moteur (M), cette vanne (V0) est maintenue dans la position d'ouverture complète (à 100%). Cette période réduite (TD) permet de faire recirculer le mélange air/carburant restant dans le moteur (M) et n'ayant pas subi de combustion. Les paramètres de régime et de température ambiante (T) sont alors pris en compte à l'aide de la cartographie pour le contrôle de la fermeture progressive de la vanne EGR (V0).

Dans le mode de réalisation des figures 2 et 3, pendant la période de démarrage (TS) du moteur (M) où le régime moteur augmente jusqu'à un régime seuil (RS) de fin de démarrage, le procédé prévoit une étape (54) évolutive de fermeture partielle de la vanne EGR (V0) par le dispositif de commande (10) en correspondance avec la consigne d'ouverture. Cette consigne est déterminée lors de l'étape (53) de calibration dynamique qui utilise l'unité de traitement (100) pour déterminer la consigne d'ouverture de la vanne EGR (V0) en fonction des données fournies au dispositif de commande (10) lors d'une étape (52) de collecte. Les données représentatives de la vitesse (V) de régime moteur et de la température (T) ambiante sont fournies à l'aide de capteurs (14) au dispositif (10) lors de cette étape (52) de collecte. Une sonde (14) permet par exemple de mesurer une température d'eau qui constitue ladite température (T) ambiante.

L'étape (53) de calibration dynamique peut utiliser une cartographie de consigne du type susmentionné, dans laquelle deux axes de paramétrage sont représentés par des informations de régime moteur en abscisse et par des informations de température (T) ambiante en ordonnée. Le troisième axe prévu pour la consigne d'ouverture est prévu pour que l'unité de traitement (100) puisse déterminer la consigne permettant au dispositif de commande (10) de commander l'actionneur qui ajuste la position d'ouverture de la vanne EGR (V0). Ladite cartographie est par exemple mémorisée au préalable sous la forme d'une table de correspondance par le dispositif de commande (10), dans des moyens de mémorisation (15). L'étape (53) de calibration dynamique comprend une interpolation linéaire effectuée par des moyens de calcul de l'unité de traitement (100) pour déterminer la consigne d'ouverture. Les données fournies au dispositif de commande (10) lors de l'étape (52) de collecte et la cartographie permettent ainsi de déterminer une consigne en tout point de fonctionnement. L'étape (53) de calibration dynamique peut utiliser en outre un paramètre indicateur d'altitude pour corriger ou pondérer la consigne d'ouverture.

Dans un mode de réalisation de l'invention, l'étape (51) d'ouverture complète de la vanne EGR (V0) n'est réalisée que si la température (T) ambiante ne dépasse pas un seuil de température calibrable et si le moteur (M) n'est pas démarré, l'état de démarrage du moteur (M) étant détecté par le dispositif de commande (10) à l'aide d'une information de type bit de démarrage. Le domaine de définition pour utiliser la fonction d'ouverture initiale de la vanne EGR peut ainsi se limiter par exemple à des conditions de température froide (température d'eau < seuil de température calibrable). La vanne doit ainsi être fermée dès lors que le seuil de température est atteint ou que le régime moteur atteint/dépasse un seuil (RS) de régime calibrable, ou encore qu'une information d'état de démarrage du moteur est reçue (startbit nul par exemple).

Comme illustré à la figure 3, une étape (55) de fermeture complète de la vanne EGR (V0) est déclenchée par le dispositif de commande (10) au moins lorsque le régime seuil (RS) de fin de démarrage est atteint. Une étape (50) préalable de calcul du seuil du régime seuil (RS) de fin de démarrage peut être réalisée par l'unité de traitement (100), à l'aide d'une table de correspondance mémorisée dans le dispositif de commande (10). Cette table prend en compte la température (T) ambiante initialement collectée.

En référence aux figures 2 et 3, le procédé selon l'invention permet de réguler la commande d'ouverture en fermant la vanne EGR (V0) selon deux pentes lors de la rampe de régime, pour une température d'eau donnée. L'étape (54) évolutive de fermeture partielle de la vanne EGR (V0) comprend en effet une première sous-étape (541) permettant une fermeture partielle avec une première vitesse globale de fermeture lente ; puis une seconde sous-étape (542) permettant de poursuivre la fermeture partielle avec une seconde vitesse globale de fermeture plus élevée. Dans un mode de réalisation de l'invention, la seconde vitesse est au moins quatre fois plus élevée que ladite première vitesse. Les différences de pente entre la première zone (C21) d'abaissement de la courbe (C2) et la seconde zone (C21) d'abaissement illustrent ce mode de commande sur la figure 2. Lorsque la vitesse du régime moteur illustrée par la courbe (C1) de la figure 2 dépasse le seuil (RS) et atteint le régime ralenti (pallier), la vanne EGR (V0) est fermée.

La vanne EGR (V0) peut ensuite, bien après le démarrage, être ouverte pour fonctionner dans les conditions de fonctionnement « à chaud ». La durée comprise entre la mise en rotation du moteur (M) et la première fermeture de la vanne réalisée lors de l'étape (55) peut être de l'ordre de 2 secondes. Cette durée est naturellement sensiblement rallongée d'autant plus que la température (T) ambiante est basse (par exemple -25°C). La figure 2 illustre également la période de latence (Tr) nécessaire pour que le moteur (M) accepte les gaz de la recirculation EGR, alors que l'ouverture de la vanne EGR a été commandée.

D'autres fonctionnalités de contrôle initial de la vanne EGR (V0) utilisant des indicateurs/diagnostics peuvent exercées par le dispositif de commande (10) selon l'invention. Les fonctionnalités connues réalisées pour contrôler la présence de la vanne EGR et son éventuel blocage (contrôle de la continuité et du niveau du signal électrique de la vanne) peuvent ainsi être maintenues. Il faut simplement que ces tâches soient achevées avant la mise en rotation du moteur (M). La vanne EGR (V0) est ouverte de préférence avant même la synchronisation PMH (Point Mort Haut) du moteur (M).

Idéalement, le procédé précité est exécuté à l'aide d'instructions émanant d'un calculateur ou ordinateur doté d'un logiciel approprié stocké dans des moyens de mémorisation du calculateur.

Un des avantages du procédé selon l'invention est d'améliorer les conditions de température et de pression dans les cylindres pour permettre un bon départ à froid (de -30 à 10°C par exemple) dans un moteur diesel du type suralimenté. Ce type de démarrage optimisé à l'aide de la circulation EGR est très intéressant en particulier pour des moteurs à taux de compression réduit.

## Revendications

1. Procédé de commande d'au moins une vanne de recirculation EGR (V0) des gaz brûlés lors de la phase de démarrage d'un moteur diesel (M) du type doté d'un système externe de contrôle de la combustion avec recirculation EGR, mis en oeuvre par un dispositif de commande (10) doté d'une unité de traitement (100), **caractérisé en ce qu'**il comprend une étape (51) d'ouverture complète de la vanne EGR (V0) par le dispositif de commande (10), pendant une durée réduite (TD) déterminée à partir de l'initiation (T0) du démarrage du moteur (M) et, au moins pendant la période de démarrage (TS) du moteur (M) permettant d'augmenter le régime moteur jusqu'à un régime seuil (RS) de fin de démarrage :
- une étape (52) de collecte par le dispositif de commande (10) de données représentatives d'une vitesse (V) de régime moteur et d'une température (T) ambiante, fournies à l'aide de capteurs ;
- une étape (53) de calibration dynamique utilisant l'unité de traitement (100) pour déterminer une consigne d'ouverture de la vanne EGR (V0) en fonction des données fournies au dispositif de commande (10) lors de l'étape (52) de collecte ;
- une étape (54) évolutive de fermeture partielle de la vanne EGR (V0) par le dispositif de commande (10) en correspondance avec ladite consigne d'ouverture déterminée lors de l'étape (53) de calibration dynamique.

2. Procédé selon la revendication 1, comprenant une étape (55) de fermeture complète de la vanne EGR (V0) effectuée par le dispositif de commande (10) au moins lorsque le régime seuil (RS) de fin de démarrage est atteint.

3. Procédé selon la revendication 1 ou 2, comprenant une étape (50) préalable de calcul du seuil du régime seuil (RS) de fin de démarrage par l'unité de traitement (100), à l'aide d'une table de correspondance mémorisée dans le dispositif de commande (10) et tenant compte de la température (T) ambiante initialement collectée.

4. Procédé selon une des revendications 1 à 3, dans lequel l'étape (52) de collecte comprend une mesure de température d'un liquide de refroidissement du moteur (M) pour mesurer ladite température (T) ambiante.

5. Procédé selon une des revendications 1 à 4, dans lequel l'étape (53) de calibration dynamique utilise une cartographie de consigne dans laquelle deux axes de paramétrage sont représentés par des informations de régime moteur en abscisse et par des informations de température ambiante en ordonnée, un troisième axe étant prévu pour la consigne d'ouverture permettant de commander un actionneur qui ajuste la position d'ouverture de la vanne EGR (V0), ladite cartographie étant préalablement mémorisée sous la forme d'une table de correspondance par le dispositif de commande (10).

6. Procédé selon la revendication 5, dans lequel la consigne de commande représente un pourcentage d'ouverture/fermeture de la vanne EGR (V0).

7. Procédé selon une des revendications 1 à 6, dans lequel l'étape (51) d'ouverture complète de la vanne EGR (V0) n'est réalisée que si la température (T) ambiante ne dépasse pas un seuil de température calibrable et si le moteur (M) n'est pas démarré, l'état de démarrage du moteur (M) étant détecté par le dispositif de commande (10) à l'aide d'une information de type bit de démarrage.

8. Procédé selon une des revendications 5 à 7 dans lequel l'étape (53) de calibration dynamique comprend une interpolation linéaire effectuée par des moyens de calcul de l'unité de traitement (100) pour déterminer, à partir des données fournies au dispositif de commande (10) lors de l'étape (52) de collecte, la consigne d'ouverture.

9. Procédé selon une des revendications 1 à 8, dans lequel l'étape étape (54) évolutive de fermeture partielle de la vanne EGR (V0) comprend :
- une première sous-étape (541) permettant une fermeture partielle avec une première vitesse globale de fermeture lente ; puis
- une seconde sous-étape (542) permettant de poursuivre la fermeture partielle avec une seconde vitesse globale de fermeture au moins quatre fois plus élevée que ladite première vitesse.

10. Procédé selon une des revendications 1 à 9, dans lequel l'étape (53) de calibration dynamique utilise en outre un paramètre indicateur d'altitude pour corriger ou pondérer la consigne d'ouverture.

11. Procédé selon une des revendications 1 à 10, mis en oeuvre par l'intermédiaire d'un dispositif de commande (10) de type calculateur et utilisant un système de recirculation du type à haute pression dont la vanne EGR (V0) est ouverte par un signal de commande provenant du dispositif de commande (10) lors de l'étape (51) d'ouverture complète pour faire recirculer en amont d'une turbine (12) d'échappement un mélange air/carburant n'ayant pas subi de combustion vers un répartiteur (3) d'admission du moteur (M).

12. Procédé selon une des revendications 1 à 11, comprenant une étape de commande d'un moyen d'aiguillage (V2) pour orienter la totalité du flux des gaz recirculés vers une conduite (32) de dérivation parallèle à un refroidisseur (E) de la recirculation EGR.

13. Procédé selon la revendication 11 ou 12, comprenant une étape de contrôle par le dispositif de commande (10) d'un turbocompresseur à géométrie variable pour maintenir des ailettes de la turbine (12) fermées afin d'augmenter le débit de gaz recirculés.

14. Dispositif de commande (10) d'au moins une vanne de recirculation EGR (V0) des gaz brûlés lors de la phase de démarrage d'un moteur diesel (M) du type doté d'un système externe de contrôle de la combustion avec recirculation EGR, le dispositif (10) comprenant une unité de traitement (100), **caractérisé en ce qu'**il comporte :
- des moyens de mémorisation (15) pour stocker au moins une information représentative d'un régime seuil (RS) de fin de démarrage ;
- des moyens de détection d'une phase de démarrage ;
- des moyens actionneurs agencés pour maintenir la vanne EGR (V0) complètement ouverte pendant une durée réduite (TD) déterminée à partir de l'initiation (T0) du démarrage du moteur (M) ;
- des moyens d'estimation d'une vitesse (V) de régime moteur ;
- des moyens (14) d'estimation d'une température (T) ambiante ;
- des moyens de collecte de données représentatives de la température (T) ambiante estimée et de la vitesse (V) de régime moteur estimée ;
- des moyens d'association pour associer aux données fournies par les moyens de collecte une consigne d'ouverture de la vanne EGR (V0) et contrôler avec cette consigne les moyens actionneurs afin de contrôler une fermeture partielle de la vanne EGR (V0) durant la phase de démarrage.

15. Dispositif selon la revendication 14, dans lequel les moyens d'association sont agencés pour comparer, lors de la phase de démarrage, une valeur de vitesse de régime moteur estimée fournie par les moyens de collecte à une valeur représentative du régime seuil (RS) de fin de démarrage, les moyens d'association délivrant une consigne de fermeture complète de la vanne EGR (V0) dès que la valeur de seuil est atteinte.

16. Dispositif selon la revendication 14 ou 15, dans lequel l'unité de traitement est agencée pour calculer préalablement un régime seuil (RS) de fin de démarrage, en utilisant une table de correspondance stockée dans les moyens de mémorisation (15) permettant de tenir compte de la température (T) ambiante initialement collectée pour déterminer ledit régime seuil (RS).

17. Programme de calculateur directement chargeable dans la mémoire d'un calculateur pour commander les étapes de la revendication 1 ou 2 lorsque ledit programme est exécuté sur un calculateur.

## Claims

1. Method for controlling at least one exhaust gas recirculation EGR valve (V0) during the start-up phase of a diesel engine (M) of the type provided with an external system for controlling combustion using EGR, implemented by a control device (10) provided with a processing unit (100), **characterized in that** it comprises a step (51) in which the control device (10) opens the EGR valve (V0) to the wide open position, for a short time (TD) measured from the moment (TO) the starting of the engine (M) is initiated and, at least for the period (TS) over which the engine (M) is start so that the engine speed can be increased to an end-of-starting threshold speed (RS):
- a step (52) during which the control device (10) gathers data representative of an engine speed (V) and an ambient temperature (T), these data being supplied by sensors;
- a step (53) of dynamic calibration using the processing unit (100) to determine an EGR valve (V0) openness setpoint as a function of the data supplied to the control device (10) during the data-gathering step (52);
- a progressive step (54) in which the control device (10) partially closes the EGR valve (V0) in accordance with said openness setpoint determined during the dynamic calibration step (53).

2. Method according to Claim 1, comprising a step (55) in which the EGR valve (V0) is fully closed by the control device (10) at least when the end-of-start threshold speed (RS) is reached.

3. Method according to Claim 1 or 2, comprising a preliminary step (50) during which the processing unit (100) calculates the threshold for the end-of-start threshold speed (RS) using a look-up table stored in memory in the control device (10) and taking account of the ambient temperature (T) initially gathered.

4. Method according to one of Claims 1 to 3, in which the data-gathering step (52) involves measuring the temperature of an engine (M) coolant in order to measure said ambient temperature (T).

5. Method according to one of Claims 1 to 4, in which the dynamic calibration step (53) uses a setpoints map in which two parametrizing axes are represented by engine speed information on the abscissa axis and ambient temperature information on the ordinate axis, a third axis being provided for the openness setpoint so that an actuator which adjusts how open the EGR valve (V0) is can be controlled, said map being pre-stored in memory by the control device (10) in the form of a look-up table.

6. Method according to Claim 5, in which the control setpoint represents a percentage indicating how open/closed the EGR valve (V0) is.

7. Method according to one of Claims 1 to 6, in which the step (51) during which the EGR valve (V0) is wide open is performed only if the ambient temperature (T) does not exceed a calibrateable temperature threshold and if the engine (M) has not started, the start status of the engine (M) being detected by the control device (10) using information of the startbit type.

8. Method according to one of Claims 5 to 7, in which the dynamic calibration step (53) comprises linear interpolation performed by calculation means of the processing unit (100) in order to determine the openness setpoint from the data supplied to the control device (10) during the data-gathering step (52).

9. Method according to one of Claims 1 to 8, in which the progressive step (54) in which the EGR valve (V0) is partially closed comprises:
- a first substep (541) during which partial closure is performed at a slow first overall rate of closure; followed by
- a second substep (542) during which partial closure is continued at a second overall rate of closure that is at least four times faster than said first rate.

10. Method according to one of Claims 1 to 9, in which the dynamic calibration step (53) also makes use of an altitude indicating parameter by means of which the openness setpoint is corrected or weighted.

11. Method according to one of Claims 1 to 10, implemented using a control device (10) of the computer type and using a recirculation system of the high pressure type in which the EGR valve (V0) is opened by a control signal originating from the control device (10) during the wide opening step (51) in order to recirculate an air/fuel mixture that has not undergone combustion from upstream of an exhaust turbine (12) to an inlet manifold (3) of the engine (M).

12. Method according to one of Claims 1 to 11, comprising a step of controlling a routing means (V2) in order to direct the entire flow of recirculated gas to a bypass pipe (32) parallel to an EGR cooler (E).

13. Method according to Claim 11 or 12, comprising a step whereby the control device (10) controls a variable-geometry turbocompressor in order to keep the vanes of the turbine (12) closed, in order to increase the flow rate of recirculated gas.

14. Device (10) for controlling at least one exhaust gas recirculation EGR valve (V0) during the start-up phase of a diesel engine (M) of the type provided with an external combustion control system using EGR, the device (10) comprising a processing unit (100), **characterized in that** it comprises:
- memory storage means (15) for storing at least one item of information representative of an end-of-start threshold speed (RS);
- means of detecting a start-up phase;
- actuator means designed to keep the EGR valve (V0) wide open for a short time (TD) measured from the moment (T0) the starting of the engine (M) is initiated;
- means of estimating an engine speed (V);
- means (14) of estimating an ambient temperature (T);
- means of gathering data representative of the estimated ambient temperature (T) and of the estimated engine speed (V);
- pairing means for pairing an EGR valve (V0) openness setpoint with the data supplied by the data-gathering means and of using this setpoint to control the actuator means in order to control partial closure of the EGR valve (V0) during the start-up phase.

15. Device according to Claim 14, in which the pairing means are designed to compare, during the start-up phase, an estimated engine speed value supplied by the data-gathering means with a value representative of the end-of-start threshold speed (RS), the pairing means delivering a setpoint to fully close the EGR valve (V0) as soon as the threshold value is reached.

16. Device according to Claim 14 or 15, in which the processing unit is designed to calculate an end-of-start threshold speed (RS) beforehand using a look-up table stored in the memory storage means (15) making it possible to take account of the ambient temperature (T) gathered initially in order to determine said threshold speed (RS).

17. Computer program that can be loaded directly into the memory of a computer to control the steps of Claim 1 or 2 when said program is run on a computer.

## Patentansprüche

1. Verfahren zur Steuerung mindestens eines AGR-Rückführventils (V0) der in der Startphase eines Dieselmotors (M) verbrannten Gase von der Art, die mit einem externen Kontrollsystem der Verbrennung mit AGR-Rückführung ausgestattet ist, durchgeführt von einer Steuervorrichtung (10), die mit einer Verarbeitungseinheit (100) ausgestattet ist, **dadurch gekennzeichnet, dass** es einen Schritt (51) der vollständigen Öffnung des AGR-Ventils (V0) durch die Steuervorrichtung (10) während einer bestimmten reduzierten Dauer (TD) ausgehend von der Initiierung (T0) des Starts des Motors (M), und mindestens während der Startperiode (TS) des Motors (M), die es ermöglicht, die Motordrehzahl bis zu einer Startende-Schwellendrehzahl (RS) zu erhöhen, enthält:
- einen Schritt (52) des Sammelns, durch die Steuervorrichtung (10), von für eine Nenn-Motordrehzahl (V) und für eine Umgebungstemperatur (T) repräsentativen Daten, die mit Hilfe von Sensoren geliefert werden;
- einen Schritt (53) der dynamischen Kalibrierung, der die Verarbeitungseinheit (100) verwendet, um einen Öffnungssollwert des AGR-Ventils (V0) abhängig von den im Sammelschritt (52) an die Steuervorrichtung (10) gelieferten Daten zu bestimmen;
- einen progressiven Schritt (54) der teilweisen Schließung des AGR-Ventils (V0) durch die Steuervorrichtung (10) entsprechend dem im Schritt (53) der dynamischen Kalibrierung bestimmten Öffnungssollwert.

2. Verfahren nach Anspruch 1, das einen Schritt (55) der vollständigen Schließung des AGR-Ventils (V0) aufweist, der von der Steuervorrichtung (10) mindestens dann ausgeführt wird, wenn die Startende-Schwellendrehzahl (RS) erreicht ist.

3. Verfahren nach Anspruch 1 oder 2, das einen vorhergehenden Schritt (50) der Berechnung der Schwelle der Startende-Schwellendrehzahl (RS) durch die Verarbeitungseinheit (100) mit Hilfe einer in der Steuervorrichtung (10) gespeicherten Korrespondenztabelle und unter Berücksichtigung der anfangs gesammelten Umgebungstemperatur (T) enthält.

4. Verfahren nach einem der Ansprüche 1 bis 3, bei dem der Sammelschritt (52) eine Temperaturmessung einer Kühlflüssigkeit des Motors (M) enthält, um die Umgebungstemperatur (T) zu messen.

5. Verfahren nach einem der Ansprüche 1 bis 4, bei dem der Schritt (53) der dynamischen Kalibrierung ein Sollwert-Kennfeld verwendet, in dem zwei Parametrierungsachsen durch Motordrehzahlinformationen in der Abszisse und durch Umgebungstemperaturinformationen in der Ordinate dargestellt sind, wobei eine dritte Achse für den Öffnungssollwert vorgesehen ist, der es ermöglicht, einen Stellantrieb zu steuern, der die Öffnungsstellung des AGR-Ventils (V0) einstellt, wobei das Kennfeld vorab durch die Steuervorrichtung (10) in Form einer Korrespondenztabelle gespeichert wird.

6. Verfahren nach Anspruch 5, bei dem der Steuersollwert einen Öffnungs-/Schließ-Prozentsatz des AGR-Ventils (V0) darstellt.

7. Verfahren nach einem der Ansprüche 1 bis 6, bei dem der Schritt (51) der vollständigen Öffnung des AGR-Ventils (V0) nur durchgeführt wird, wenn die Umgebungstemperatur (T) eine kalibrierbare Temperaturschwelle nicht überschreitet, und wenn der Motor (M) nicht gestartet wird, wobei der Startzustand des Motors (M) von der Steuervorrichtung (10) mit Hilfe einer Information der Art Startbit erfasst wird.

8. Verfahren nach einem der Ansprüche 5 bis 7, bei dem der Schritt (53) der dynamischen Kalibrierung einer lineare Interpolation enthält, die von Recheneinrichtungen der Verarbeitungseinheit (100) ausgeführt wird, um den Öffnungssollwert ausgehend von den im Sammelschritt (52) an die Steuervorrichtung (10) gelieferten Daten zu bestimmen.

9. Verfahren nach einem der Ansprüche 1 bis 8, bei dem der progressive Schritt (54) der teilweisen Schließung des AGR-Ventils (V0) enthält:
- einen ersten Teilschritt (541), der eine teilweise Schließung mit einer ersten langsamen globalen Schließgeschwindigkeit erlaubt; dann
- einen zweiten Teilschritt (542), der es erlaubt, die teilweise Schließung mit einer zweiten globalen Schließgeschwindigkeit fortzusetzen, die mindestens vier Mal höher ist als die erste Geschwindigkeit.

10. Verfahren nach einem der Ansprüche 1 bis 9, bei dem der Schritt (53) der dynamischen Kalibrierung außerdem einen Höhenanzeigeparameter verwendet, um den Öffnungssollwert zu korrigieren oder zu gewichten.

11. Verfahren nach einem der Ansprüche 1 bis 10, das mittels einer Steuervorrichtung (10) der Art Rechner durchgeführt wird und ein Rückführsystem der Art mit hohem Druck verwendet, dessen AGR-Ventil (V0) durch ein von der Steuervorrichtung (10) im Schritt (51) der vollständigen Öffnung kommendes Steuersignal geöffnet wird, um vor einer Abgasturbine (12) ein Luft/Kraftstoffgemisch, das keine Verbrennung erfahren hat, zu einem Ansaugverteiler (3) des Motors (M) rückzuführen.

12. Verfahren nach einem der Ansprüche 1 bis 11, das einen Schritt der Steuerung einer Verzweigungseinrichtung (V2) enthält, um die Gesamtheit des Stroms der rückgeführten Gase zu einer Abzweigungsleitung (32) parallel zu einem Kühler (E) der AGR-Rückführung auszurichten.

13. Verfahren nach Anspruch 11 oder 12, das einen Schritt der Kontrolle, durch die Steuervorrichtung (10), eines Turboladers mit variabler Geometrie enthält, um die Schaufeln der Turbine (12) geschlossen zu halten, um den Durchsatz rückgeführter Gase zu erhöhen.

14. Steuervorrichtung (10) mindestens eines AGR-Rückführventils (V0) der während der Startphase eines Dieselmotors (M) verbrannten Gase der Art, die mit einem externen Kontrollsystem der Verbrennung mit AGR-Rückführung ausgestattet ist, wobei die Vorrichtung (10) eine Verarbeitungseinheit (100) enthält, **dadurch gekennzeichnet, dass** sie aufweist:
- Speichereinrichtungen (15), um mindestens eine für eine Startende-Schwellendrehzahl (RS) repräsentative Information zu speichern;
- Einrichtungen zur Erfassung einer Startphase;
- Stelleinrichtungen, die ausgebildet sind, um das AGR-Ventil (V0) während einer reduzierten Dauer (TD) vollständig geöffnet zu halten, die ausgehend von der Initiierung (T0) des Starts des Motors (M) bestimmt wird;
- Einrichtungen zur Schätzung einer Nenn-Motordrehzahl (V);
- Einrichtungen (14) zur Schätzung einer Umgebungstemperatur (T);
- Sammeleinrichtungen von Daten, die für die geschätzte Umgebungstemperatur (T) und die geschätzte Nenn-Motordrehzahl (V) repräsentativ sind;
- Zuordnungseinrichtungen, um den von den Sammeleinrichtungen gelieferten Daten einen Öffnungssollwert des AGR-Ventils (V0) zuzuordnen und mit diesem Sollwert die Stelleinrichtungen zu kontrollieren, um eine teilweise Schließung des AGR-Ventils (V0) während der Startphase zu kontrollieren.

15. Vorrichtung nach Anspruch 14, bei dem die Zuordnungseinrichtungen ausgebildet sind, um bei der Startphase einen geschätzten Nenn-Motordrehzahlwert, der von den Sammeleinrichtungen geliefert wird, mit einem für die Startende-Schwellendrehzahl (RS) repräsentativen Wert zu vergleichen, wobei die Zuordnungseinrichtungen einen Sollwert des vollständigen Schließens des AGR-Ventils (V0) liefern, sobald der Schwellwert erreicht ist.

16. Vorrichtung nach Anspruch 14 oder 15, bei dem die Verarbeitungseinheit ausgebildet ist, um vorab eine Startende-Schwellendrehzahl (RS) zu berechnen, indem eine in den Speichereinrichtungen (15) gespeicherte Korrespondenztabelle verwendet wird, die es ermöglicht, die anfangs gesammelte Umgebungstemperatur (T) zu berücksichtigen, um die Schwellendrehzahl (RS) zu bestimmen.

17. Rechnerprogramm, das direkt in den Speicher eines Rechners geladen werden kann, um die Schritte des Anspruchs 1 oder 2 zu steuern, wenn das Programm in einem Rechner ausgeführt wird.
